# EUROPÄISCHE PATENTSCHRIFT

(11) **EP 1 045 178 B1**
(45) Veröffentlichungstag und Bekanntmachung des Hinweises auf die Patenterteilung: **11.05.2005**
(21) Anmeldenummer: 00106564.8
(22) Anmeldetag: 27.03.2000
(51) Int. Cl.: F16J 15/447, F16J 15/42, F16J 15/16, F01D 25/18

(54) **Hydraulische Dichtungsanordnung insbesondere an einer Gasturbine**
Hydraulic sealing arrangement in particular for gas turbine
Dispositif d'étanchéité, en particulier pour turbine à gaz

(30) Priorität: 14.04.1999 DE 19916803
(43) Veröffentlichungstag der Anmeldung: 18.10.2000
(73) Patentinhaber: Rolls-Royce Deutschland Ltd & Co KG, 15827 Dahlewitz (DE)
(72) Erfinder: Böck, Alexander, 15806 Zossen (DE)
(74) Vertreter: Weber, Joachim, Dr.

(56) Entgegenhaltungen:
- DE-A- 3 328 057
- FR-A- 2 621 970
- GB-A- 848 601
- GB-A- 1 284 596
- US-A- 3 765 688

## Beschreibung

Die Erfindung bezieht sich auf eine hydraulische Dichtungsanordnung nach dem Oberbegriff der Hauptansprüche. Im Einzelnen betrifft die Erfindung eine hydraulische Dichtungsanordnung zwischen zwei relativ zueinander insbesondere in der gleichen Drehrichtung rotierenden Wellen insbesondere eines Gasturbinen-Triebwerkes, wobei die in Radialrichtung bezüglich der Wellen-Rotationsachse außen liegende Welle einen sich über ihrem Umfang radial nach außen erstreckenden Ringraum aufweist, in welchen die in Radialrichtung bezüglich der Wellen-Rotationsachse innen liegende Welle mit einem über ihren Umfang radial nach außen gerichteten Steg hineinragt und der nach Art eines Siphons zumindest im Bereich des freien Endes des Steges bei Rotation der Welle(n) über einen Eintrittsbereich unter Fliehkraftwirkung mit einem Hydraulikmedium befüllbar ist. Zum technischen Umfeld wird beispielshalber auf die DE 33 28 057 A1 verwiesen.

Hydraulische Dichtungen nach dem Oberbegriff des Anspruchs 1, die auch als Fliehkraftsiphon" bezeichnet werden können, sind seit langem als berührungslose und dabei leckagefreie Dichtungen bekannt. Insbesondere sind sie dazu geeignet, zwei relativ zueinander rotierende Wellen gegeneinander abzudichten. Hierzu wird ein Hydraulikmedium, insbesondere Öl aus dem Ölkreislauf der die Wetten enthaltenden Maschine, insbesondere eines Gasturbinen-Triebwerkes, in den genannten Ringraum gegeben, das sich dort durch die aufgrund der Rotation der Welle(n) auftretenden Fliehkrafteffekte zu einer Sperre ausbildet.

Keine Probleme treten bei einer derartigen einfachen und dabei äußerst wirkungsvollen hydraulischen Dichtung in relativ kühler Umgebung auf. Wird jedoch eine solche Dichtung nach dem Oberbegriff des Anspruchs 1 in einer relativ heißen Umgebung eingesetzt, wobei das Wellenmaterial im Bereich des genannten Ringraumes bspw. eine Temperatur in der Größenordnung von 500°C besitzt, so würde sich auch das Hydraulikmedium (Öl) bis zu dieser Temperatur erwärmen und dabei unweigerlich (zumindest über einen längeren Zeitraum betrachtet) verkoken. Daß aufgrund des hiermit verbundenen zumindest partiellen Aushärtens des Hydraulikmediums und des daraus resultierenden Anhaftens von verkoktem Öl an den Begrenzungswänden des Ringraumes bzw. Siphons keine sichere Dichtwirkung mehr gewährleistet ist, liegt auf der Hand.

Aus der FR 2 621 970 A lässt sich eine hydraulische Dichtungsanordnung entnehmen, bei welcher ein in Form einer Ringnut ausgebildeter Behälter-Bereich vorgesehen ist, der radial nach innen geöffnet ist und durch eine Trennwand unterteilt wird. Bei Drehung des außenliegenden Wellenelements verbleibt das Öl oder Schmiermittel in der Ringnut und führt somit zu einer Abdichtung.

Aus der US 3 765 688 A ist eine hydraulische Dichtungsanordnung bekannt, bei welcher eine im Querschnitt U-förmige, radial nach innen geöffnete Kammer vorgesehen ist, deren radial außenliegende Wandung mit einer Ablauföffnung versehen ist.

Eine Maßnahme aufzuzeigen, mit Hilfe derer eine hydraulische Dichtung nach dem Oberbegriff des Anspruch 1 auch in relativ heißer Umgebung eingesetzt werden kann, ist Aufgabe der vorliegenden Erfindung.

Erfindungsgemäß wird die Aufgabe durch die Merkmalskombination der Hauptansprüche gelöst, die Unteransprüche zeigen weitere vorteilhafte Ausgestaltungen der Erfindung

Erfindungsgemäß wird für einen kontinuierlichen Durchsatz von Hydraulikmedium durch den den Siphon bildenden Ringraum gesorgt, wenn kontinuierlich zumindest eine Teilmenge des darin befindlichen Hydraulikmediums abgeführt und - selbstverständlich - wieder ergänzt und somit nachgefüllt wird, d.h. der Ringraum / Siphon muß hierfür im wesentlichen kontinuierlich mit dem Hydraulikmedium befüllbar sein. Dies hat zur Folge, daß kontinuierlich frisches und somit relativ kaltes Öl bzw. Hydraulikmedium in den Ringraum / Siphon gelangt, während das dort bereits durch die Umgebung erwärmte Hydraulikmedium (zumindest teilweise, bevorzugt jedoch im wesentlichen vollständig) abgeführt wird. Das Öl bzw. Hydraulikmedium verbleibt somit nicht solange im Ringraum, daß ein Verkoken auftreten könnte. Gleichzeitig wird durch die kontinuierliche Durchströmung des Ringraumes mit Hydraulikmedium von den Begrenzungswänden des Ringraumes soviel Wärme abgeführt, daß diese abgekühlt werden und auch deshalb keine weitere Verkokungsgefahr besteht. Indem dabei die Möglichkeit zur Abfuhr zumindest einer Teilmenge von Hydraulikmedium in demjejingen Ringraum-Bereich liegt, der vom Eintrittsbereich im wesentlichen am weitesten entfernt liegt, ist sichergestellt, daß das sich im Ringraum befindende Hydraulikmedium zumindest bestmöglich durch das kontinuierlich neu hinzukommende Hydraulikmedium abgekühlt wird, im besten Falle sogar im wesentlichen vollständig kontinuierlich ausgetauscht wird.

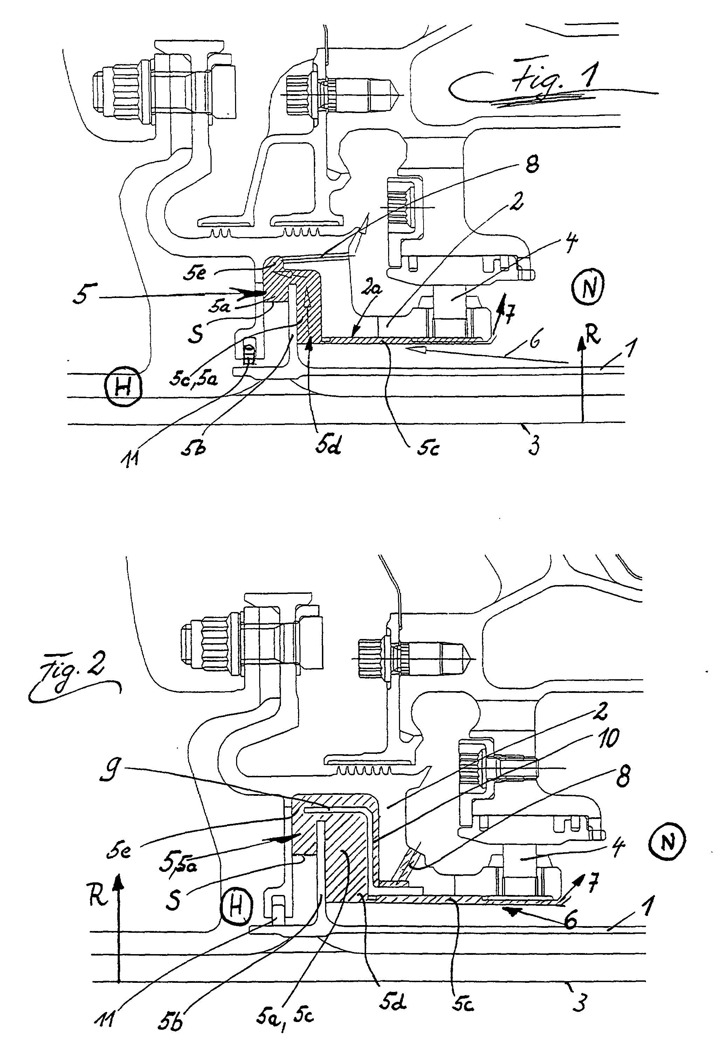

Bezüglich der konstruktiven Ausführung für eine Möglichkeit zur Abfuhr einer Teilmenge des Hydraulikmedium aus dem Ringraum bzw. Siphon gibt es verschiedene Varianten. Zwei bevorzugte Ausführungsbeispiele sind in den beigefügten **Figuren 1 und 2** jeweils in einem Teilschnitt dargestellt und werden im folgenden näher erläutert. Dabei sind gleiche Bauelemente in den beiden Figuren mit den gleichen Bezugsziffern versehen.

Mit der Bezugsziffer 1 ist die erste Welle und mit der Bezugsziffer 2 die zweite Welle eines Zweiwellen-Gasturbinen-Flugtriebwerks bezeichnet, die beide mit unterschiedlicher Geschwindigkeit und somit auch relativ zueinander (dabei aberbevorzugt im gleichen Drehsinn) um die Rotationsachse 3 dieses Triebwerks rotieren. Wie üblich sind diese Wellen 1, 2, von denen jeweils lediglich ein Teilabschnitt dargestellt ist, konzentrisch zueinander angeordnet, wobei die erste Welle 1 die Niederdruckwelle darstellt und somit innerhalb der zweiten Welle 2, welche die Hochdruckwelle ist, angeordnet ist. Unter der Bezugsziffer 4 erkennt man weiterhin das Loslager der Hochdruck-Welle 2.

Rechtsseitig dieses Loslagers 4 sowie in Radialrichtung R (diese steht senkrecht auf der Rotationsachse 3) betrachtet außerhalb der Welle 2 liegt somit ein Bereich N des Gasturbinen-Innenraumes, in welchem ein relativ niedriger Druck herrscht, weiter linksseitig des Loslagers 4 sowie in Radialrichtung R betrachtet innerhalb der Welle 2 liegt ein Bereich H mit relativ hohem Druck. Diese beiden Bereiche N und H müssen möglichst wirkungsvoll gegeneinander abgedichtet sein, wofür die in ihrer Gesamtheit mit der Bezugsziffer 5 bezeichnete hydraulische Dichtungsanordnung zwischen den beiden Wellen 1, 2 vorgesehen ist.

Gebildet wird diese hydraulische Dichtungsanordnung 5 im wesentlichen durch einen an der Innenseite der außen liegenden Welle 2 vorgesehenen und sich dabei über deren Umfang in Radialrichtung R nach außen erstrekkenden Ringraum 5a. In diesen Ringraum 5a ragt ein an der innen liegenden Welle 1 vorgesehener, über deren Umfang sich ebenfalls in Radialrichtung R nach außen erstreckender Steg 5b hinein. Ein großer Teil des Ringraumes 5a und insbesondere derjenige Teilbereich desselben, in welchem das freie Ende des Steges 5b liegt, ist bzw. wird mit Öl (aus dem Ölkreislauf des Triebwerks) oder allgemein mit einem (durch Schraffur dargestelltem) Hydraulikmedium 5c befüllt, und zwar über einen sog. Eintrittsbereich 5d.

Über diesen ebenfalls ringförmigen, hier rechtsseitig des Steges 5b liegenden Eintrittsbereich 5d kann das Hydraulikmedium 5c, das in Form eines zwischen die beiden Wellen 1, 2 gemäß Pfeilrichtung 6 eingebrachten Öl-Spritzstrahles auch zur Schmierung des Loslagers 4 herangeführt wird, wie im folgenden beschrieben in den Ringraum 5a gelangen:
Aufgrund der Rotation der beiden Wellen 1, 2 und der damit verbundenen Fliehkrafteffekte lagert sich das gemäß Pfeilrichtung 6 eingebrachte Hydraulikmedium 5c wie dargestellt an der bezüglich des Zwischenraumes zwischen den Wellen 1 und 2 radial außen liegenden Innenwand 2a der außen liegenden Welle 2 an. Somit gelangt - ebenfalls unter Fliehkrafteinfluß - das Hydraulikmedium 5c auch in den in der Welle 2 vorgesehenen Ringraum 5a, der gegenüber demjenigen Bereich der Innenwand 2a, in welchem das Hydraulikmedium 5c gemäß Pfeilrichtung 6 zugeführt wird, in Radialrichtung R betrachtet erheblich weiter außen liegt. Dabei sammelt sich das Hydraulikmedium 5c im Ringraum 5a sowohl linksseitig als auch rechtsseitig des Steges 5b an, so daß hierdurch - wie ersichtlich - nach Art eines Siphons eine optimale hydraulische Abdichtung entsteht.

Hier linksseitig des Steges 5b bzw. auf der dem Bereich H zugewandten Seite des Steges 5b liegt die Oberfläche bzw. der Flüssigkeitsspiegel S des Hydraulikmediums 5c dabei selbstverständlich radial weiter außen als rechtsseitig des Steges 5b, da der letztgenannte rechtsseitige Bereich des Steges 5b mit dem Bereich N in Verbindung steht, in welchem ein gegenüber dem Bereich H erheblich niedrigerer Druck herrscht. Im übrigen kann über den rechtsseitigen freien Endabschnitt der Welle 2 überschüssiges Hydraulikmedium 5c, welches aufgrund der Differenzdruckverhältnisse zwischen den Bereichen H und N im Ringraum 5a nicht weiter in den Bereich linksseitig des Steges 5b gelangen kann, gemäß Pfeilrichtung 7 abgeführt werden, so daß mit dieser Bezugsziffer 7 quasi auch ein Überlauf der hydraulischen Dichtungsanordnung 5 bezeichnet werden kann.

Wie eingangs erwähnt ist eine derartige hydraulische Dichtungsanordnung 5 grundsätzlich zuverlässig, dies allerdings nur bei relativ niedrigen Umgebungstemperaturen, d.h. wenn keine Verkokungsgefahr für das hier als Hydraulikmedium 5c zum Einsatz kommende Öl aus dem Ölkreislauf des Gasturbinen-Triebwerks besteht. In demjenigen Bereich einer Gasturbine, in dem die hier dargestellte und erläuterte hydraulische Dichtungsanordnung 5 vorgesehen ist, herrschen jedoch relativ hohe Temperaturen. Insbesondere nimmt auch das Material der beiden Wellen 1, 2 in diesem Bereich relativ hohe Temperaturen an, so daß die Gefahr besteht, daß das im Ringraum 5a befindliche Hydraulikmedium 5c stark erwärmt wird und somit verkoken könnte.

Um dies zu verhindern sind in den beiden Ausführungsbeispielen (in Details unterschiedliche) Möglichkeiten zur Abfuhr einer Teilmenge des Hydraulikmediums 5c aus dem Ringraum 5a vorgesehen, und zwar jeweils in einem Ringraum-Bereich 5e, der im wesentlichen am weitesten vom Eintrittsbereich 5d entfernt liegt. Um dabei eine bestmögliche Durchspülung des sog. Siphons bzw. des Ringraumes 5a mit kontinuierlich neu über den Eintrittsbereich 5d zugeführtem Hydrauklikmedium 5c, welches das aus dem Ringraum-Bereich 5e abgeführte Hydraulikmedium ersetzt, zu ermöglichen, ist stets der Eintrittsbereich 5d des Ringraumes 5a in Radialrichtung R betrachtet möglichst weit innenliegend vorgesehen, während der besagte Ringraum-Bereich 5e mit der Abfuhrmöglichkeit für das Hydraulikmedium in Radialrichtung R betrachtet möglichst weit außen sowie nahe der dem Eintrittsbereich 5d gegenüberliegenden Seite des Ringraumes 5a vorgesehen ist

Beim Ausführungsbeispiel nach **Figur 1** ist die besagte Möglichkeit zur Abfuhr einer Teilmenge des Hydraulikmediums 5c in Form zumindest einer die außen liegende Welle 2 im wesentlichen in Richtung der Rotationsachse 3 durchdringenden und dabei geringfügig radial nach außen geneigt verlaufenden Ablaufbohrung 8 ausgebildet. Über diese Ablaufbohrung 8 wird somit aus dem Ringraum-Bereich 5e kontinuierlich eine gewisse Menge von Hydraulikmedium 5c abgeleitet. Die ebenfalls kontinuierliche Nachbefüllung des Ringraumes 5a erfolgt wie oben erläutert über den Eintrittsbereich 5d mittels des Öl-Spritzstrahles gemäß Pfeilrichtung 6.

Wie vor Beginn der Beschreibung der beiden bevorzugten Ausführungsbeispiele bereits erläutert wurde, gelangt somit kontinuierlich frisches und somit relativ kaltes Öl bzw. Hydraulikmedium 5c in den Ringraum 5a (bzw. in den Siphon der hydraulischen Dichtungsanordnung 5), während ein Teil des dort bereits durch die Umgebung erwärmten Hydraulikmediums 5c über die Ablaufbohrung 8 abgeführt wird. Das Öl bzw. Hydraulikmedium 5c verbleibt somit nur kurzzeitig im Ringraum 5a, so daß kein Verkoken desselben auftreten kann. Gleichzeitig wird durch die im wesentlichen kontinuierliche Durchströmung des Ringraumes 5a mit Hydraulikmedium 5c von den Begrenzungswänden des Ringraumes 5a soviel Wärme abgeführt, daß diese abgekühlt werden und auch deshalb keine weitere Verkokungsgefahr besteht. In einem bevorzugten Auslegungsfall wurde der Querschnitt der Ablaufbohrung 8 dabei derart gewählt, daß innerhalb einer Sekunde das gesamte im Ringraum 5a befindliche Hydraulikmedium 5c ausgetauscht wird.

Beim Ausführungsbeispiel nach **Figur 2** ist die besagte Möglichkeit zur Abfuhr einer Teilmenge des Hydraulikmediums 5c in Form eines ebenfalls im besagten Ringraum-Bereich 5e beginnenden und dabei dem Wandverlauf des Ringraumes 5a unter geringem Abstand im wesentlichen folgenden Abschöpfbleches 9 ausgebildet, welches das Hydraulikmedium 5c durch den durch den Abstand gebildeten Spalt 10 in einen radial weiter innen liegenden Bereich führt, von welchem eine die außen liegende Welle 2 im wesentlichen in Radialrichtung R nach außen durchdringende Ablaufbohrung 8 abzweigt.

Wie ersichtlich besitzt beim Ausführungsbeispiel nach **Figur 2** nicht nur die Ablaufbohrung 8, sondern auch der Spalt 10 eine größere Querschnittsfläche als die Ablaufbohrung 8 des Ausführungsbeispieles nach **Figur 1**. Auf diese Weise besteht beim Ausführungsbeispiel nach **Figur 2** nicht die Gefahr, daß die Ablaufbohrung 8 verstopfen könnte, was beim Ausführungsbeispiel nach **Figur 1** unter widrigen Randbedingungen geschehen könnte. Andererseits darf bei Ausführungsbeispiel nach **Figur 1** der Querschnitt der Ablaufbohrung 8 nicht allzu groß sein, um zu gewährleisten, daß sich stets eine (im Hinblick auf die gewünschte Abdichtung) ausreichende Menge von Hydraulikmedium 5c im Ringraum 5a befindet. Da beim Ausführungsbeispiel nach **Figur 2** die Ablaufbohrung 8 in Radialrichtung R betrachtet weiter innen liegt als beim Ausführungsbeispiel nach **Figur 1** kann der freie Strömungsquerschnitt der Ablaufbohrung 8 (sowie des Spaltes 10) aufgrund der geringeren Fliehkraft bei **Figur 2** selbstverständlich größer sein als bei **Figur 1.**

Bei beiden Ausführungsbeispielen mündet die Ablaufbohrung 8 im Bereich N des Gasturbinen-Innenraumes, in welchem ein relativ niedriger Druck herrscht. Dabei ist der bereits erwähnte Bereich H des Gasturbinen-Innenraumes, in welchem ein relativ hoher Druck herrscht, gegenüber dem Bereich N bzw. gegenüber dem Ringraum 5a zusätzlich zur hydraulischen Dichtungsanordnung 5 mittels eines zwischen den beiden Wellen 1, 2 angeordneten Dichtringes 11 (bspw. ausgebildet in Form eines Kolbenringes) abgedichtet. Dieser Dichtring 11 wirkt jedoch nur bei Stillstand der Wellen 1, 2, kann hingegen bei rotierenden Wellen 1, 2 aufgrund von Fliehkrafteffekten keine Abdichtung gewährleisten, so daß die hydraulische Dichtungsanordnung 5 benötigt wird. Dabei können durchaus eine Vielzahl von Details insbesondere konstruktiver Art abweichend von den gezeigten Ausführungsbeispielen gestaltet sein, ohne den Inhalt der Patentansprüche zu verlassen.

### Bezugszeichenliste:

- 1: (erste, innere) Welle
- 2: (zweite, äußere) Welle
- 2a: Innenwand (von 2)
- 3: Rotationsachse
- 4: Loslager

- 5: hydraulische Dichtungsanordnung
- 5a: Ringraum (in 2)
- 5b: Steg (an 1)
- 5c: Hydraulikmedium
- 5d: Eintrittsbereich (von 5a)
- 5e: Ringraum-Bereich (mit Abfuhr-Möglichkeit)

- 6: Pfeilrichtung : Öl-Spritzstrahl
- 7: Pfeilrichtung : Überlauf
- 8: Ablaufbohrung
- 9: Abschöpfblech
- 10: Spalt (zwischen 9 und 2)
- 11: Dichtring (zwischen 1 und 2)

- N: Bereich des Gasturbinen-Innenraumes mit (relativ) niedrigem Druck
- H: Bereich des Gasturbinen-Innenraumes mit (relativ) hohem Druck
- R: Radialrichtung
- S: Flüssigkeitsspiegel bzw. Oberfläche von 5c in 5a

## Patentansprüche

1. Hydraulische Dichtungsanordnung (5) zwischen zwei relativ zueinander, insbesondere in der gleichen Drehrichtung rotierenden Wellen (1, 2), insbesondere eines Gasturbinen-Triebwerkes,
wobei die in Radialrichtung (R) bezüglich der Wellen-Rotationsachse (3) außen liegende Welle (2) einen sich über ihren Umfang radial nach außen erstreckenden Ringraum (5a) aufweist,
wobei die innen liegende Welle (1) in Radialrichtung (R) bezüglich der Wellen-Rotationsachse (3) mit einem über ihren Umfang radial nach außen gerichteten Steg (5b) in den Ringraum (5a) hineinragt,
wobei der Ringraum (5a) nach Art eines Siphons zumindest im Bereich des freien Endes des Steges (5b) bei Rotation der Welle(n) (1, 2) über einen Eintrittsbereich (5d) unter Fliehkraftwirkung mit einem Hydraulikmedium (5c) befüllbar ist,
wobei abzweigend von einem Ringraum-Bereich (5e), der im Wesentlichen am weitesten vom Eintrittsbereich (5d) entfernt liegt, eine Möglichkeit zur Abfuhr einer Teilmenge des Hydraulikmediums (5c) vorgesehen ist,
**dadurch gekennzeichnet,**
**dass** der Eintrittsbereich (5d) des Ringraumes (5a) in Radialrichtung (R) betrachtet möglichst weit innen liegend vorgesehen ist,
**dass** der Ringraum-Bereich (5e) mit der Abfuhrmöglichkeit für das Hydraulikmedium (5c) in Radialrichtung (R) betrachtet möglichst weit außen sowie nahe der dem Eintrittsbereich (5d) gegenüberliegenden Seite des Ringraumes (5a) vorgesehen ist, und
**dass** die Möglichkeit zur Abfuhr einer Teilmenge des Hydraulikmediums (5c) in Form zumindest einer die außen liegende Welle (2) im Wesentlichen in Richtung der Rotationsachse (3) durchdringenden und dabei geringfügig radial nach außen geneigt verlaufenden Ablaufbohrung (8) ausgebildet ist.

2. Hydraulische Dichtungsanordnung (5) zwischen zwei relativ zueinander, insbesondere in der gleichen Drehrichtung rotierenden Wellen (1, 2), insbesondere eines Gasturbinen-Triebwerkes,
wobei die in Radialrichtung (R) bezüglich der Wellen-Rotationsachse (3) außen liegende Welle (2) einen sich über ihren Umfang radial nach außen erstreckenden Ringraum (5a) aufweist,
wobei die innen liegende Welle (1) in Radialrichtung (R) bezüglich der Wellen-Rotationsachse (3) mit einem über ihren Umfang radial nach außen gerichteten Steg (5b) in den Ringraum (5a) hineinragt,
wobei der Ringraum (5a) nach Art eines Siphons zumindest im Bereich des freien Endes des Steges (5b) bei Rotation der Welle(n) (1, 2) über einen Eintrittsbereich (5d) unter Fliehkraftwirkung mit einem Hydraulikmedium (5c) befüllbar ist,
wobei abzweigend von einem Ringraum-Bereich (5e), der im Wesentlichen am weitesten vom Eintrittsbereich (5d) entfernt liegt, eine Möglichkeit zur Abfuhr einer Teilmenge des Hydraulikmediums (5c) vorgesehen ist,
**dadurch gekennzeichnet,**
**dass** der Eintrittsbereich (5d) des Ringraumes (5a) in Radialrichtung (R) betrachtet möglichst weit innen liegend vorgesehen ist,
**dass** der Ringraum-Bereich (5e) mit der Abfuhrmöglichkeit für das Hydraulikmedium (5c) in Radialrichtung (R) betrachtet möglichst weit außen sowie nahe der dem Eintrittsbereich (5d) gegenüberliegenden Seite des Ringraumes (5a) vorgesehen ist, und
**dass** die Möglichkeit zur Abfuhr einer Teilmenge des Hydraulikmediums (5c) in Form eines im besagten Ringraum-Bereichs (5e) beginnenden und dem Wandverlauf des Ringraumes (5a) unter geringem Abstand im Wesentlichen folgenden Abschöpfblechs (9) ausgebildet ist, welches das Hydraulikmedium (5c) durch den durch den Abstand gebildeten Spalt (10) in einen radial weiter innen liegenden Bereich führt, von welchem eine die außen liegende Welle (2) im Wesentlichen in Radialrichtung (R) nach außen durchdringende Ablaufbohrung (8) abzweigt.

3. Hydraulische Dichtungsanordnung nach einem der Ansprüche 1 oder 2, **dadurch gekennzeichnet, dass** die Ablaufbohrung (8) in einen Bereich (N) des Gasturbinen-Innenraums mündet, in welchem im Gebrauch ein relativ niedriger Druck herrscht, wohingegen ein anderer Bereich (H) des Gasturbinen-Innenraums, in welchem im Gebrauch ein relativ hoher Druck herrscht, gegenüber dem Ringraum (5a) mittels eines zwischen den beiden Wellen (1, 2) angeordneten Dichtringes (11) zusätzlich abgedichtet ist.

## Claims

1. Hydraulic sealing arrangement (5) between two shafts (1, 2) rotating relatively to each other, especially in the same sense of rotation, particularly of a gas turbine engine,
where the radially (radial direction R) outer shaft (2) when viewed with reference to the shafts' axis of rotation (3) has an annulus (5a) extending radially outwards along its circumference,
where the radially (radial direction R) inner shaft (1) when viewed with reference to the shafts' axis of rotation (3) projects into the annulus (5a) by means of a web (5b) that extends radially outwards along its circumference,
where the annulus (5a) can be filled siphon-fashion under centrifugal effect with a hydraulic medium (5c) via an inlet area (5d) at least in the region of the free end of the web (5b) when the shaft(s) (1, 2) is (are) rotating,
where a means is provided for discharging part of the hydraulic medium (5c), said means branching off from an annulus area (5e) that essentially lies farthest from the inlet area (5d),
**characterized in**
**that** the inlet area (5d) of the annulus (5a) is arranged as far inward as possible when viewed in the radial direction (R),
**that** the annulus area (5e) containing the discharging means for the hydraulic medium (5c) is arranged as far outward as possible when viewed in the radial direction (R) and close to that side of the annulus (5a) which faces the inlet area (5d), and
**that** the means for discharging part of the hydraulic medium (5c) takes the shape of at least one outlet duct (8) passing through the outer shaft (2) in essentially the direction of axis of rotation (3) and having a slight radially outward inclination.

2. Hydraulic sealing arrangement (5) between two shafts (1, 2) rotating relatively to each other, especially in the same sense of rotation, particularly of a gas turbine engine,
where the radially (radial direction R) outer shaft (2) when viewed with reference to the shafts' axis of rotation (3) has an annulus (5a) extending radially outwards along its circumference,
where the radially (radial direction R) inner shaft (1) when viewed with reference to the shafts' axis of rotation (3) projects into the annulus (5a) by means of a web (5b) that extends radially outwards along its circumference,
where the annulus (5a) can be filled siphon-fashion under centrifugal effect with a hydraulic medium (5c) via an inlet area (5d) at least in the region of the free end of the web (5b) when the shaft(s) (1, 2) is (are) rotating,
where a means is provided for discharging part of the hydraulic medium (5c), said means branching off from an annulus area (5e) that essentially lies farthest from the inlet area (5d),
**characterized in**
**that** the inlet area (5d) of the annulus (5a) is arranged as far inward as possible when viewed in the radial direction (R),
**that** the annulus area (5e) containing the discharging means for the hydraulic medium (5c) is arranged as far outward as possible when viewed in the radial direction (R) and close to that side of the annulus (5a) which faces the inlet area (5d), and
**that** the means for discharging part of the hydraulic medium (5c) takes the shape of a scoop plate (9) which begins in said annulus area (5e) and essentially follows the wall contour of the annulus (5a) at a small distance therefrom to duct the hydraulic medium (5c) through the gap (10) formed by the distance into a radially further inward area, from which an outlet duct (8) branches off which passes through the outer shaft (2) to the outside in an essentially radial direction (R).

3. Hydraulic sealing arrangement in accordance with one of the Claims 1 or 2, **characterized in that** the outlet duct (8) issues into an area (N) of the gas turbine interior, where the pressure is relatively low in operation, whereas another area (H) of the gas turbine interior, where the pressure is relatively high in operation, is additionally sealed off from the annulus (5a) by means of a sealing ring (11) arranged between the two shafts (1, 2).

## Revendications

1. Structure hydraulique d'étanchéité (5) entre deux arbres (1, 2), notamment d'un moteur à turbine à gaz, tournant relativement l'un par rapport à l'autre en particulier dans le même sens de rotation, sachant
que l'arbre (2) placé à l'extérieur dans le sens radial (R) par rapport à l'axe de rotation (3) des arbres présente un espace annulaire (5a) s'éténdant vers l'extérieur autour de son pourtour dans le sens radial,
que l'arbre (1) placé à l'intérieur dans le sens radial (R) par rapport à l'axe de rotation (3) des arbres fait saillie dans l'espace annulaire (5a) avec une nervure (5b) orientée vers l'extérieur dans le sens radial sur son pourtour, que quand l'arbre/ les arbres (1, 2) est/ sont en rotation, l'espace annulaire (5a) peut être rempli à la manière d'un siphon sous l'effet de la force centrifuge à travers une zone d'entrée (5d) au moins dans la région de l'extrémité libre de la nervure (5b) par un fluide hydraulique (5c),
qu'une possibilité pour évacuer une partie du fluide hydraulique (5c) est prévue, qui part d'une zone de l'espace annulaire (5e) qui est pour l'essentiel la plus éloignée de la zone d'entrée (5d),
**caractérisée en ce**
**que** la zone d'entrée (5d) de l'espace annulaire (5a) est observée dans le sens radial (R), prévue le plus possible vers l'intérieur,
**que** la zone de l'espace annulaire (5e) avec la possibilité d'évacuation du fluide hydraulique (5c) est observée dans le sens radial (R), prévue le plus possible vers l'extérieur et proche du côté de l'espace annulaire (5a) opposé à la zone d'entrée (5d), et
**que** la possibilité pour évacuer une partie du fluide hydraulique (5c) revêt la forme d'au moins un perçage d'évacuation (8) traversant l'arbre extérieur (2) pour l'essentiel dans le sens de l'axe de rotation (3) et légèrement incliné vers l'extérieur dans le sens radial.

2. Structure hydraulique d'étanchéité (5) entre deux arbres (1, 2), notamment d'un moteur à turbine à gaz, tournant relativement l'un par rapport à l'autre en particulier dans le même sens de rotation, sachant
que l'arbre (2) placé à l'extérieur dans le sens radial (R) par rapport à l'axe de rotation (3) des arbres présente un espace annulaire (5a) s'étendant vers l'extérieur autour de son pourtour dans le sens radial,
que l'arbre (1) placé à l'intérieur dans le sens radial (R) par rapport à l'axe de rotation (3) des arbres fait saillie dans l'espace annulaire (5a) avec une nervure (5b) orientée vers l'extérieur dans le sens radial sur son pourtour, que quand l'arbre/ les arbres (1, 2) est/ sont en rotation, l'espace annulaire (5a) peut être rempli à la manière d'un siphon sous l'effet de la force centrifuge à travers une zone d'entrée (5d) au moins dans la région de l'extrémité libre de la nervure (5b) par un fluide hydraulique (5c),
qu'une possibilité pour évacuer une partie du fluide hydraulique (5c) est prévue, qui part d'une zone de l'espace annulaire (5e) qui est pour l'essentiel la plus éloignée de la zone d'entrée (5d),
**caractérisée en ce**
**que** la zone d'entrée (5d) de l'espace annulaire (5a) est observée dans le sens radial (R), prévue le plus possible vers l'intérieur,
**que** la zone de l'espace annulaire (5e) avec la possibilité d'évacuation du fluide hydraulique (5c) est observée dans le sens radial (R), prévue le plus possible vers l'extérieur et proche du côté de l'espace annulaire (5a) opposé à la zone d'entrée (5d), et
**que** la possibilité pour évacuer une partie du fluide hydraulique (5c) revêt la forme d'une tôle de prélèvement (9) partant de ladite zone (5e) de l'espace annulaire et suivant pour l'essentiel à une faible distance le tracé de la paroi de l'espace annulaire (5a) qui achemine le fluide hydraulique (5c) à travers l'interstice (10) formé par l'écart vers une zone située dans le sens radial davantage vers l'intérieur, de laquelle part un perçage d'évacuation (8) traversant l'arbre extérieur (2) vers l'extérieur et dans le sens radial (R) pour l'essentiel.

3. Structure hydraulique d'étanchéité selon une des revendications 1 ou 2, **caractérisée en ce que** le perçage d'évacuation (8) débouche dans une zone (N) de l'intérieur de la turbine à gaz dans laquelle règne une pression relativement basse en cours de fonctionnement, alors qu'une autre zone (H) de l'intérieur de la turbine à gaz, dans laquelle règne une pression relativement élevée en cours de fonctionnement, est en outre étanchéifiée par rapport à l'espace annulaire (5a) au moyen d'une bague d'étanchéité (11) placée entre les deux arbres (1, 2).
